# EUROPÄISCHE PATENTSCHRIFT

(11) **EP 3 642 291 B1**
(45) Veröffentlichungstag und Bekanntmachung des Hinweises auf die Patenterteilung: **14.05.2025**
(21) Anmeldenummer: 18735518.5
(22) Anmeldetag: 19.06.2018
(51) Int. Cl.: C09J 7/21

(54) **FILMKLEBSTOFF SOWIE VERFAHREN ZU DESSEN HERSTELLUNG**
FILM ADHESIVE AND METHOD FOR PRODUCING SAME
ADHÉSIF SOUS FORME DE FILM ET SON PROCÉDÉ DE PRODUCTION

(30) Priorität: 19.06.2017 DE 102017113432
(43) Veröffentlichungstag der Anmeldung: 29.04.2020
(73) Patentinhaber: Deutsches Zentrum für Luft- und Raumfahrt e.V., 51147 Köln (DE)
(72) Erfinder: HEILMANN, Lennert, 28201 Bremen (DE)
(74) Vertreter: Gramm, Lins & Partner Patent- und Rechtsanwälte PartGmbB
(86) Internationale Anmeldenummer: PCT/EP2018/066227
(87) Internationale Veröffentlichungsnummer: WO 2018/234298

(56) Entgegenhaltungen:
- EP-A1- 1 381 641
- EP-A1- 2 324 979
- US-A1- 2013 101 805
- US-A1- 2015 147 536

## Beschreibung

Die Erfindung betrifft einen Filmklebstoff zum stoffschlüssigen Fügen wenigstens zweier Fügepartner, wobei der Filmklebstoff einen Klebstoff für eine Klebverbindung der Fügepartner und ein textiles, flächiges Trägermaterial enthält, auf das der Klebstoff filmartig aufgetragen ist. Die Erfindung betrifft auch ein Verfahren zur Herstellung eines solchen Filmklebstoffes sowie ein Verfahren zur Herstellung einer Klebverbindung mittels eines solchen Filmklebstoffes.

Aufgrund der gewichtsspezifischen Festigkeit und Steifigkeit sind Faserverbundwerkstoffe bei der Herstellung von jedweden Bauteilen kaum mehr wegzudenken. Faserverbundwerkstoffe bestehen dabei hauptsächlich aus zwei wesentlichen Bestandteilen, nämlich einem Fasermaterial und einem Matrixmaterial und können hier neben ggf. noch weitere Bestandteile (anwendungsspezifisch) aufweisen. Bei der Herstellung von Faserverbundbauteilen aus einem Faserverbundwerkstoff wird dabei in der Regel das Fasermaterial in die entsprechende spätere Bauteilform gebracht und dann das in das Fasermaterial infundierte Matrixmaterial ausgehärtet. Das Aushärten geschieht in den allermeisten Fällen durch Temperatur und ggf. Druckbeaufschlagung. Durch das Aushärten werden die lasttragenden Fasern des Fasermaterials in ihre vorbestimmte Richtung gezwungen und bilden dabei zusammen mit dem ausgehärteten Matrixmaterial eine integrale Einheit zur Lastabtragung.

Nicht nur bei der Herstellung komplexer Faserverbundbauteile stellt das Kleben ein Fügeverfahren mit besonderem Leichtbaupotential dar. Mithilfe einer Klebverbindung werden dabei zwei Bauteile an ihren jeweiligen Fügeflächen mittels Kohäsion und oder Adhäsion fest und in der Regel nicht lösbar miteinander verbunden, wobei auf weitergehende mechanische Befestigungselemente nur dann verzichtet werden kann, wenn das Versagen der hergestellten Klebverbindung für das Betreiben der jeweiligen zugrunde gelegten technischen Einrichtung unerheblich ist. Die Validierung der Festigkeit und Dauerhaftigkeit hergestellter Klebverbindungen stellt dabei ein Kernproblem von Klebetechniken dar, da falsche oder unzureichende Oberflächenbehandlungen, überlagert oder unsachgemäß prozessierte Klebstoffe sowie Kontaminationen die Klebfestigkeit stark herabsetzen können. Gerade im Bereich der Luftfahrt bei der Herstellung von Luftfahrzeugen insbesondere aus einem Faserverbundwerkstoff, bei dem auch Strukturbauteile mittels Klebverbindungen aus Faserverbundbauteilen hergestellt werden, ist es essentiell notwendig, dass die Klebverbindung eine Festigkeit und Dauerhaftigkeit aufweist, da im Schadensfall einer derartigen Klebverbindung ein sicherer Flugbetrieb nicht mehr gewährleistet werden kann.

So können die Betriebslasten in kontaminierten Bereichen der Klebverbindung zum lokalen Auftrennen der Fügeverbindung mit anschließendem Risswachstum durch die gesamte Klebenaht führen, wodurch die Belastbarkeit der Klebverbindung stark herabgesetzt wird bis hin zum vollständigen Versagen der Klebung.

In der Luftfahrt ist es daher gängige Praxis, die Klebverbindung in gewissen Abständen durch zusätzliche, mechanische Verbindungselemente ("Angstnieten") zu sichern, was jedoch dem Grundsatz des Leichtbaus diametral gegenüberseht. Der Nutzen, der durch die Klebverbindung erreicht werden soll, nämlich durch eine Gewichtsreduzierung im Flugbetrieb auch Treibstoff und somit Kosten einzusparen, wird durch diese zusätzlichen mechanischen Verbindungselemente wieder zunichte gemacht.

So ist aus der DE 10 2013 107 849 A1 ein Verfahren zum Herstellen einer Faserverbundstruktur aus mindestens zwei getrennt hergestellten Faserverbund-Bauelementen bekannt, die mittels Kleben als ein Fügeverfahren aneinander gefügt werden sollen. Hierbei werden zwei unterschiedliche Klebstoffsysteme verwendet, die so in die Klebverbindung eingebracht werden, dass separate Klebstoffzonen aus dem ersten Klebstoffsystem und dem zweiten Klebstoffsystem entstehen. Im verfestigten Zustand des zweiten Klebstoffsystems weist dieses gegenüber dem ersten Klebstoffsystem eine höhere Bruchzähigkeit auf, wodurch innerhalb der Klebverbindung die Klebenaht unterschiedliche Eigenschaften hat. In Bereichen mit einer niedrigen Bruchzähigkeit und einer hohen Festigkeit (erstes Klebstoffsystem) können entstehende Risse sich nur bis in die Bereiche der zweiten Klebstoffzone ausbreiten, wo die Klebenaht eine hohe Bruchzähigkeit (zäh-elastisch), aber eine verringerte Festigkeit und Steifigkeit, ausbreiten. In der Klebenaht entstandene Risse können so wirksam auf einen lokalen Bereich begrenzt werden.

Der Nachteil hierbei ist jedoch, dass das Einbringen zweier unterschiedlicher Klebstoffsysteme, die jeweils abwechselnd aneinandergrenzen, sehr aufwendig ist, was wiederum zu längeren Fügezeiten und somit zu höheren Kosten führt. Außerdem muss bei der Herstellung derartiger Klebeverbindungen beim Einbringen des Klebstoffes sehr sorgfältig gearbeitet werden, da die aneinandergrenzenden, unterschiedlichen Klebstoffsysteme nach Möglichkeit spaltfrei aneinandergrenzen sollten, um Lastbrücken in diesem Bereich zu vermeiden. Darüber hinaus ändert sich die Eigenschaft bzgl. der Bruchdehnung an den Rändern der Klebstoffzonen sprunghaft, was eine Rissfortbildung entlang der Ränder begünstigt.

Aus der EP 2 324 979 A1 ist eine Preform sowie ein entsprechendes Herstellungsverfahren bekannt, wobei die Preform mehrere Lagen eines Textilhalbzeuges aufweist. Dabei wird offenbart, dass das Fasermaterial oder dass das Matrixmaterial der Preform entsprechende Zusätze aufweist, um so beispielsweise die Viskosität oder andere mechanische Eigenschaften des Matrixmaterials zu beeinflussen. Außerdem ist in der D1 vorgesehen, dass die Lagen der Preform so übereinandergelegt werden, dass eine Art Rampe in den Randbereichen entsteht.

Die WO 02/088231 A1 bzw. EP 1 381 641 A1 offenbart ein Fasermaterial (Prepregs) zur Herstellung eines Faserverbundbauteils mittels eines Formwerkzeuges, wobei das Fasermaterial erste Bereiche aufweist, die einen hohen Anteil von Matrixmaterial haben und zweite Bereiche aufweist, die einen niedrigen Anteil von Matrixmaterial haben.

Die US 2013/0101805 A1 offenbart ein mehrlagiges Fasermaterial, das entsprechende unterschiedliche Ausprägungen haben soll. Dabei ist auch ein Bauteil vorgesehen, das über eine Zwischenlage mehrere andere Lagen miteinander verbindet. Schließlich offenbart die US 2015/0147536 A1 ein Bauteil zur Herstellung von Autodächern, wobei auch hier mehrere Lagen Fasermaterial unterschiedlicher Ausprägung vorgesehen sind.

Es ist daher Aufgabe der vorliegenden Erfindung ein verbessertes Verfahren bereitzustellen, mit dem sich zwei Bauteile prozesssicher mithilfe des Klebens aneinander fügen lassen, wobei die herzustellende Klebverbindung eine rissstoppende bzw. risshemmende Eigenschaft haben soll. Es ist daher auch Aufgabe der vorliegenden Erfindung ein verbessertes Klebstoffsystem sowie ein Verfahren zur dessen Herstellung anzugeben, um die Herstellung einer derartigen Klebverbindung zu bewirken. Die Aufgabe wird mit dem Filmklebstoff gemäß Anspruch 1, dem Verfahren zu dessen Herstellung gemäß Anspruch 5 sowie dem Verfahren zur Herstellung einer Klebverbindung gemäß Anspruch 8 erfindungsgemäß gelöst.

Gemäß Anspruch 1 wird ein Filmklebstoff zum Kleben und Fügen wenigstens zweier Fügepartner vorgeschlagen, wobei der Filmklebstoff einen Klebstoff für eine Klebverbindung der Fügepartner und ein textiles, flächiges Trägermaterial enthält, wobei der Klebstoff filmartig auf das textile, flächige Trägermaterial aufgetragen ist. Der Klebstoff ist dabei auf das textile Trägermaterial insbesondere so aufgetragen, dass das textile, flächige Trägermaterial von dem Klebstoff zumindest an den flächigen Seiten des textilen Trägermaterials, das den Fügeflächen der beiden Fügepartner gegenüberliegt, vollständig abgedeckt ist. Das textile, flächige Trägermaterial dient bei dem Filmklebstoff insbesondere als Abstandshalter für eine vordefinierte und vorgegebene Stärke bzw. Dicke der Klebverbindung. Die Klebverbindung wird dabei ausschließlich durch den Klebstoff realisiert, wobei hierbei das textile, flächige Trägermaterial gerade nicht als Verbindung zwischen den beiden Fügepartnern dient. Die Klebverbindung wird ausschließlich über den Klebstoff realisiert. So ist es beispielsweise denkbar, dass das textile, flächige Trägermaterial vollständig von dem Klebstoff umschlossen ist und somit vollständig durch den Klebstoff getränkt ist, wobei sich hierbei insbesondere porige Trägermaterialien eignen, wie beispielsweise Fasermaterialien, die offenporig sind.

Für die Verarbeitung des Filmklebstoffes kann es von Vorteil sein, wenn im unausgehärteten Zustand das textile, flächige Trägermaterial zumindest teilweise aus dem Klebstoff hervorsteht und somit nicht vollständig vorimprägniert ist. Das textile, flächige Trägermaterial ist somit im unausgehärteten Zustand des Klebstoffes zumindest teilweise so imprägniert, dass nach dem Aushärten des Klebstoffes das textile, flächige Trägermaterial vollständig von dem ausgehärteten Klebstoff umschlossen ist.

Bei dem Klebstoff handelt es sich insbesondere um einen klebenden aushärtenden Werkstoff, der mit den Fügepartnern eine geeignete Klebverbindung eingehen kann. Insbesondere wird für den Filmklebstoff nur ein einziges Klebstoffsystem verwendet, so dass der gesamte Filmklebstoff nur ein einziges Klebstoffmaterial, welches die spätere Klebverbindung eingehen soll, enthält. Der Klebstoff als Werkstoff ist somit ein homogenes Material bzw. ein homogener Werkstoff. Im Gegensatz zu den bekannten Klebebändern, wie beispielsweise Paketklebeband, ist das textile, flächige Trägermaterial kein Fügepartner, der als Hilfsmittel für die Klebeverbindung dient. Denn bei den bekannten Klebebändern, insbesondere bei einem doppelseitigen Klebeband, wird ein Klebstoffmaterial auf einen meist kunststoffartigen Fügepartner aufgetragen, so dass beim Fügen zweier Fügepartner mithilfe eines doppelseitigen Klebebandes eine Klebverbindung hergestellt wird, die an und für sich aus zwei separaten Klebverbindungen besteht, nämlich zum einen eine Klebverbindung zwischen dem ersten Fügepartner und dem Kunststoffträger und zum anderen eine Klebverbindung zwischen Kunststoffträger und dem zweiten Fügepartner. Bei der vorliegenden Erfindung wird hingegen die Klebverbindung ausschließlich durch den Klebstoff realisiert, wobei das textile, flächige Trägermaterial kein Fügepartner im Sinne eines Klebebandes wird. Vielmehr dient das textile, flächige Trägermaterial als Träger des Klebstoffes und Abstandshalter für eine definierte Stärke der Klebverbindung.

Erfindungsgemäß ist nun vorgesehen, dass das textile, flächige Trägermaterial wenigstens einen ersten Abschnitt aufweist, der an einen wenigstens einen zweiten Abschnitt des Trägermaterials angrenzt, wobei das Trägermaterial des ersten Abschnittes gegenüber dem Trägermaterial des zweiten Abschnittes stofflich, chemisch und/oder geometrisch derart modifiziert ist, dass nach dem Aushärten des Klebstoffes die Klebverbindung in dem Bereich des ersten Abschnittes eine mechanische Eigenschaft in Bezug auf die Bruchdehnung oder Bruchzähigkeit aufweist, die von der mechanischen Eigenschaft der Klebverbindung in dem Bereich des zweiten Abschnittes verschieden ist, d.h. entweder höher oder niedriger ist.

Es wird somit ein Filmklebstoff vorgeschlagen, bei dem eine Klebverbindung ähnlich zu der DE 10 2013 107 849 A1 hergestellt werden soll, die entsprechende rissstoppende Eigenschaften hat, indem Bereiche mit einer veränderten Bruchdehnung bzw. Bruchzähigkeit vorgesehen sind, ohne dass hierbei der Klebstoff an sich von vorneherein aus zwei verschiedenen Klebstoffsystemen bestehen muss. Vielmehr wurde erkannt, dass durch eine stoffliche, chemische und/oder geometrische Modifizierung des textilen Trägermaterials erreicht werden kann, dass ein einziges Klebstoffsystem verwendet wird, das jedoch abschnittsweise beim Aushärten mit der stofflichen, chemischen und/oder geometrischen Modifizierung derart zusammenwirkt, dass in diesen modifizierten Bereichen die Klebverbindung eine höhere bzw. niedrigere Bruchdehnung oder Bruchzähigkeit hat, wodurch insgesamt der gesamten Klebverbindung eine rissstoppende Eigenschaft verliehen werden kann. Denn ein sich in einem Abschnitt ausbreitender Riss in der Klebverbindung entsteht meist in jenen Bereichen, in denen eine hohe Steifigkeit und eine geringe Bruchdehnung bzw. Bruchzähigkeit vorliegt, wobei sich ein derart entstehender Riss nur bis zu jenen benachbarten Bereichen bzw. Abschnitten ausbreitet, in denen zwar die Steifigkeit bzw. Festigkeit der Klebverbindung verringert ist, jedoch die Bruchdehnung bzw. Bruchzähigkeit erhöht ist.

Hierdurch kann ein Filmklebstoff realisiert werden, der sehr einfach herzustellen ist, da lediglich ein einziger homogener Klebstoff verwendet wird, der auf ein Trägermaterial aufgetragen wird. Erst durch die stoffliche, chemische und/oder geometrische Modifizierung von Teilen des Trägermaterials, so dass entsprechende unterschiedliche Abschnitte in dem Trägermaterial entstehen, wird die Modifikation des Klebstoffes beim Aushärten zur Herstellung der Klebverbindung erzeugt, wodurch Klebverbindungen mit rissstoppenden und risshemmenden Eigenschaften realisiert werden können.

Mit dem neuartigen Filmklebstoff kann eine Klebverbindung erzeugt werden, bei der Bereiche mit hoch festen Eigenschaften von Abschnitten mit zäh-elastischer Eigenschaft umgeben sind. Im Gegensatz zu der technischen Lehre der DE 10 2013 107 849 A1, in der klar abgegrenzte Materialeigenschaften in den verschiedenen Klebstoffbereichen erzielt werden sollen, wird durch die Modifikation des Trägermaterials beim Aushärten des Klebstoffes in der Klebverbindung ein Eigenschaftsgradient zwischen den beiden ersten und zweiten Abschnitten ausgebildet, wodurch insbesondere eine Rissfortsetzung im Randbereich vermieden wird. Denn die aus dem Stand der Technik bekannte Lösung zeigt eine sprunghafte Veränderung der Eigenschaft bezüglich der Bruchdehnung bzw. Bruchzähigkeit im Randbereich der unterschiedlichen Klebstoffzonen, während bei der vorliegenden Erfindung ein fließender Übergang von Bereichen niedriger Bruchdehnung bzw. Bruchzähigkeit und hoher Festigkeit hin zu hoher Bruchdehnung bzw. hoher Bruchzähigkeit und zäh-elastischen Eigenschaften.

Der Eigenschaftsgradient zwischen den beiden ersten und zweiten Abschnitten, d.h. der graduelle Übergang der jeweiligen Eigenschaft, sorgt für die Lastabtragung an der Rissspitze. Bei chemischen Reaktionen zwischen Klebstoff und dem aufgetragenen Mittel kann sich der Gradient beispielsweise auf natürliche Weise durch Diffusion ausbilden. Bei der geometrischen Modifikation kann der Übergang vom dünnen Bereich auf den dicken Bereich mit einem entsprechenden Übergang gestaltet werden. Bei aufgetragenen Partikeln können diese beispielsweise in einer definierten Verteilung aufgetragen werden, so dass beispielsweise bei einem linienförmigen Auftragen der Partikel in der Mitte der Linie viele Partikel vorhanden sind und die Menge bzw. Konzentration zum Rand der Linie hin graduell abnimmt.

Wie bereits angesprochen, kann das Trägermaterial des ersten Abschnittes gegenüber dem Trägermaterial des zweiten Abschnittes derart modifiziert sein, dass die Klebverbindung nach dem Aushärten in dem Bereich des ersten Abschnittes eine höhere Bruchdehnung oder eine höhere Bruchzähigkeit hat, als die Klebverbindung in dem Bereich des zweiten Abschnittes, so dass ein Riss bzw. eine Fehlstelle in der Klebverbindung innerhalb des zweiten Abschnittes sich nicht über den Bereich des ersten Abschnittes der Klebverbindung hinaus weiter fortsetzt, da hier die Klebverbindung eine höhere Bruchzähigkeit bzw. Bruchdehnung aufweist als in den Bereichen des zweiten Abschnittes. **In** diesem Fall wird ein Klebstoff mit einer hohen Festigkeit und geringen Bruchdehnung bzw. Bruchzähigkeit verwendet, der durch die Modifikation entsprechend in den Bereichen der ersten Abschnitte so modifiziert wird, dass hier Bereiche mit hoher Bruchzähigkeit bzw. Bruchdehnung entstehen, die dann die Ausbreitung von Rissen hemmen bzw. stoppen.

Selbstverständlich ist es auch denkbar, dass ein Klebstoff verwendet wird, der grundsätzlich eine hohe Bruchdehnung bzw. Bruchzähigkeit aufweist, wodurch allerdings die Steifigkeit bzw. Festigkeit des Klebstoffes herabgesetzt ist. Durch die Modifikation in den Bereichen des ersten Abschnittes wird dann erreicht, dass die Steifigkeit bzw. Festigkeit des Klebstoffes in den Bereichen des ersten Abschnittes erhöht wird, so dass die zweiten Abschnitte in dieser Ausführungsform dann die risshemmenden bzw. rissstoppenden Fähigkeiten haben.

**In** einer vorteilhaften Ausführungsform wird dabei die Bruchzähigkeit bzw. Bruchdehnung durch die Modifikation des Trägermaterials so verändert, dass sie mindestens 20 %, vorzugsweise um mindestens 50 % höher bzw. niedriger ist als in den unmodifizierten Abschnitten.

**In** einer weiteren vorteilhaften Ausführungsform wird die Steifigkeit bzw. Festigkeit durch Modifikation des Trägermaterials so verändert, dass sie mindestens 20 %, vorzugsweise um mindestens 50 % höher bzw. niedriger ist als in den unmodifizierten Abschnitten.

**In** einer vorteilhaften Ausführungsform weist das textile, flächige Trägermaterial eine Mehrzahl von ersten Abschnitten auf, die jeweils durch einen der zweiten Abschnitte voneinander abgegrenzt sind, so dass durch die ersten Abschnitte jeweils separate Zonen gebildet werden, die nicht miteinander verbunden sind.

Vorzugsweise sind die Abschnitte dabei so voneinander abgegrenzt, dass diejenigen Abschnitte, welche die rissstoppende bzw. risshemmende Eigenschaft aufweisen, die anderen Abschnitte so voneinander trennen, dass die anderen Abschnitte nicht miteinander verbunden sind. Denn ein Riss bzw. eine Fehlstelle in der Klebverbindung entsteht immer in den anderen Bereichen, die keine risshemmende bzw. rissstoppende Eigenschaft aufweisen, so dass durch die Abgrenzung mit den Abschnitten, welche die risshemmende bzw. rissstoppende Eigenschaft haben, ein Ausbreiten des Risses in der gesamten Klebverbindung gerade verhindert werden soll.

Daher sind die ersten Abschnitte vorzugsweise auf dem Trägermaterial so angeordnet, dass die ersten Abschnitte und/oder zweiten Abschnitte separate Zonen bilden, die eine Ausbreitung von Rissen in der gesamten Klebverbindung hemmen bzw. stoppen und eine solche vollständige Ausbreitung verhindern.

So ist es denkbar, dass die ersten Abschnitte auf einem bandförmigen Filmklebstoff so angeordnet werden, dass sich entlang der Längsachse des bandförmigen Filmklebstoffes die ersten und zweiten Abschnitte abwechseln, so dass zwei zweite Abschnitte durch jeweils einen ersten Abschnitt voneinander getrennt werden (und andersherum).

Ein Aspekt der Erfindung ist, dass das textile flächige Trägermaterial in einem der ersten Abschnitte derart stofflich modifiziert ist, dass das Material des Trägermaterials in diesen Bereichen ein Material ist, das beim Aushärten des Klebstoffes mit diesem eine chemische Reaktion eingeht, um die gewünschte mechanische Eigenschaft in diesen ersten Abschnitten zu bewirken und gegenüber den Bereichen der zweiten Abschnitte entsprechend zu verändern.

Dies kann beispielsweise dadurch geschehen, dass in diesen ersten Abschnitten ein Material für das Trägermaterial verwendet wurde, das beim Aushärten mit dem eingebetteten Klebstoff eine Reaktion eingeht, um so die entsprechend gewünschte Eigenschaft der Klebverbindung bewirken. So ist es denkbar, dass bei der Herstellung des textilen Trägermaterials Fasergarne oder andere linienförmige Gebilde zur Herstellung des textilen Trägermaterials verwendet werden, die ein von dem übrigen Material verschiedenes Material sind, was mit dem Klebstoff eine entsprechende chemische Reaktion eingeht, um so die Eigenschaft zu erreichen.

Hierbei ist es denkbar, dass in dem modifizierten Abschnitt entweder eine hohe Festigkeit und Steifigkeit eingestellt wird, was oftmals jedoch mit einer Reduktion der Bruchdehnung und Bruchzähigkeit einhergeht (negativer Effekt). Diese hochsteifen und hochfesten Abschnitte stellen dann die lasttragenden Bereiche dar. Oder es wird die Elastizität und Bruchdehnung erhöht, was in der Regel mit einer Erhöhung der Bruchzähigkeit und einer Reduktion der Festigkeit einhergeht. Allerdings ist die lokale Reduktion der Steifigkeit in der vorliegenden Erfindung positiv zu bewerten.

Die Funktionsweise der Erfindung beruht dabei maßgeblich darauf, dass sich steife und elastische Bereiche abwechseln. Die steifen Bereiche tragen einen Großteil der Last, wobei die elastischen Bereiche einen sich ausbildenden Riss nach einem maximalen Rissfortsatz hemmen. Durch ihre hohe Elastizität und Bruchdehnung erfahren die elastischen Bereiche größere Verformung und können dadurch einen Großteil der Last an die dahinterliegenden, steifen Bereiche weiterleiten. Gleichzeitig entlasten sie jedoch die steifen Bereiche, da sie bereits einen Teil der Last selber aufnehmen. Damit teilen sich die zwei unterschiedlichen Bereiche die Last und können diese gemeinsam tragen, anstatt nacheinander einzeln belastet zu versagen.

Durch die Modifikation des Trägermaterials können somit gezielt die Eigenschaften des Klebstoffes dahingehend beeinflusst werden, dass entweder die Steifigkeit und Festigkeit gezielt erhöht und somit lasttragende Bereiche gebildet werden oder die Elastizität gezielt erhöht und damit die rissstoppenden Bereiche gebildet werden.

Ein weiterer Aspekt der Erfindung ist, dass das textile flächige Trägermaterial in einem der ersten Abschnitte derart chemisch modifiziert ist, dass in diesem Bereich bzw. Bereichen dem Trägermaterial zusätzliche Stoffe, Partikel und/oder Füllstoffe hinzugefügt sind, die beim Aushärten des Klebstoffes mit diesem eine chemische Reaktion eingehen, um die gewünschte mechanische Eigenschaft in den ersten Abschnitten zu bewirken. So ist es beispielsweise denkbar, dass dem Trägermaterial zusätzliche Stoffe hinzugefügt werden, indem das Trägermaterial in den ersten Abschnitten mit diesen Stoffen beschichtet wird, wobei diese Stoffe dann beim Aushärten des Klebstoffes diesen entsprechend so verändern, dass er eine höhere bzw. niedrigere Bruchdehnung erhält, als in den übrigen Abschnitten des Filmklebstoffes. Denkbar ist aber auch, dass das Abstandstextil lokal mit anhaftenden Fremdkörpern versehen wird, welche beim Aushärteprozess des Klebstoffs aufgrund der reduzierten Viskosität des Klebstoffes in die Klebenaht eingebettet werden und so die Modifikation bewirken. Denkbar ist auch ein lokales Beschichten des textilen Trägermaterials mit einem Polymer geringerer Steifigkeit, welcher während der Aushärtung des Klebefilms eine Verbindung mit dem umliegenden Klebstoff eingeht und so die lokale Eigenschaftsänderung bewirkt.

Ein weiterer Aspekt der Erfindung ist, dass das textile flächige Trägermaterial in einem der ersten Abschnitte derart geometrisch modifiziert ist, dass das Material des Trägermaterials in diesen Bereichen ein Material ist, das nach dem Aushärten des Klebstoffs eine höhere oder niedrigere Dicke der Klebverbindung als in den Bereichen der zweiten Abschnitte bewirkt. So wurde erkannt, dass durch die Variation der Klebefilmdicke auch die Eigenschaften hinsichtlich der Bruchdehnung bzw. Bruchzähigkeit verändert werden kann, so dass durch eine geometrische Modifikation des Trägermaterials eben auch eine Modifikation der Bruchdehnung bzw. Bruchzähigkeit erreicht werden kann.

Die Erhöhung der Klebfilmdicke führt beispielsweise zu keiner Änderung der Klebstoffeigenschaft an sich. Da jedoch in üblichen Klebverbindungen Schub- und E-Module der Fügepartner deutlich höher sind als jene des Klebstoffes, führt eine Erhöhung der Klebschichtdicke zu einer Reduktion der Steifigkeit der Verbindung, so dass hierdurch beispielsweise die Bruchdehnung bzw. Bruchzähigkeit erhöht und somit dieser erste Bereich durch Aufdickung der Klebschichtdicke eine rissstoppende bzw. risshemmende Eigenschaft erhält.

Die Aufgabe wird im Übrigen auch mit dem Verfahren gemäß Anspruch 5 zur Herstellung eines derartigen Filmklebstoffes erfindungsgemäß gelöst, wobei auf ein bereitgestelltes flächiges textiles Trägermaterial ein bereitgestellter Klebstoff filmartig aufgetragen wird, so dass das textile flächige Trägermaterial beidseitig mit dem Klebstoff benetzt wird. Auch hier dient der Klebstoff zur Herstellung der Klebverbindung, ohne dass hierbei das textile flächige Trägermaterial ein Fügepartner wird.

Erfindungsgemäß ist dabei vorgesehen, dass das textile, flächige Trägermaterial in wenigstens einem ersten Abschnitt gegenüber wenigstens einem zweiten Abschnitt derart stofflich, chemisch und/oder geometrisch modifiziert wird, dass spätestens nach dem Aushärten des Klebstoffes die Klebverbindung in dem Bereich des ersten Abschnittes eine mechanische Eigenschaft in Bezug auf die Bruchdehnung oder Bruchzähigkeit aufweist, die von der mechanischen Eigenschaft der Klebverbindung in dem Bereich des zweiten Abschnittes verschieden ist.

Auch hier führt die stoffliche, chemische und/oder geometrische Modifikation des Trägermaterials dazu, dass beim Zusammenwirken mit dem Klebstoff die Eigenschaft des Klebstoffes entsprechend verändert wird, um so in Bezug auf die Bruchdehnung oder Bruchzähigkeit eine veränderte Eigenschaft zu anderen Bereichen zu erhalten.

Vorteilhafte Ausführungsformen dieses Verfahrens finden sich in den entsprechenden Unteransprüchen.

Die Aufgabe wird im Übrigen auch mit dem Verfahren gemäß Anspruch 8 zur Herstellung einer Klebverbindung zwischen wenigstens zwei Fügepartnern gelöst, wobei zunächst ein Filmklebstoff wie vorstehend beschrieben bereitgestellt wird. Der Klebstoff des Filmklebstoffes wird dann mit der jeweiligen Fügeoberfläche der Fügepartner kontaktiert, wobei durch Aushärten des Klebstoffes dann eine Klebverbindung mithilfe des ausgehärteten Klebstoffes zwischen den Fügepartnern bewirkt wird.

Die Fügepartner können dabei Faserverbundbauteile sein, die aus einem Faserverbundwerkstoff hergestellt wurden. Der Filmklebstoff kann dabei vorteilhafterweise ein Fasermaterial als flächiges textiles Trägermaterial aufweisen, wobei der Klebstoff des Filmklebstoffes dann beispielsweise ein Matrixmaterial eines Faserverbundwerkstoffes sein kann.

Die Erfindung wird anhand der beigefügten Figuren beispielhaft näher erläutert. Es zeigen:
- Figur 1 -: Schematische Darstellung eines Filmklebstoffes;
- Figur 2 -: Schematische Darstellung eines Filmklebstoffes im Querschnitt;
- Figur 3 -: Schematische Darstellung einer Ausführungsform des Filmklebstoffes;
- Figur 4 -: Schematische Darstellung eines Fügeverfahrens.

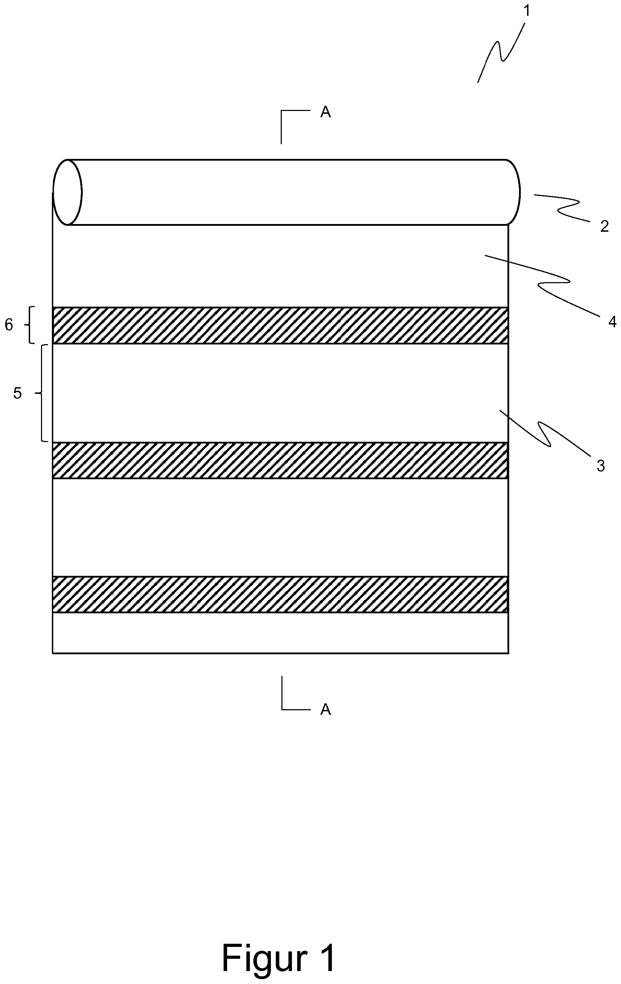

Figur 1 zeigt schematisch einen Filmklebstoff 1, der auf einer Rolle 2 aufgewickelt ist. Der Filmklebstoff 1 weist ein textiles Trägermaterial 3 auf, das in einen Klebstoff 4 eingebettet ist.

Das textile, flächige Trägermaterial 3 weist dabei vorzugsweise Abmessungen auf, die der Länge und der Breite des Filmklebstoffes 1 entsprechen. Das textile, flächige Trägermaterial 3 kann dabei vorzugsweise auf linienförmigen Gebilden zu einem flächigen Gebilde zusammengesetzt sein, wie dies beispielsweise bei gewebten Textilen der Fall ist. Es handelt sich bei dem textilen Trägermaterial 3 vorzugsweise um ein biegeschlaffes Material. Je nach Anwendungsfall kann das Trägermaterial aber auch biegesteif sein.

Der Klebstoff 4 wird dabei auf das Trägermaterial 3 so aufgetragen, dass das Trägermaterial 3 vorzugsweise an beiden Flächenseiten vollständig von dem Klebstoff abgedeckt wird. Das Trägermaterial 3 ist dabei so ausgebildet, dass es mehr oder weniger offenporig ist, so dass nach dem Aushärten des Klebstoffes 3 die Klebverbindung über das Klebstoffmaterial eine Wirkverbindung von einer Flächenseite des Trägermaterials zur anderen Flächenseite des Trägermaterials herstellt. Hierdurch wird das Trägermaterial 3 schließlich kein Fügepartner der Klebverbindung, wie dies beispielsweise bei doppelseitigem Klebeband der Fall ist.

Das Trägermaterial 3 ist dabei abschnittsweise modifiziert, so dass sich erste Abschnitte 5 ergeben, innerhalb dessen das Trägermaterial 3 stofflich, chemisch und/oder geometrisch modifiziert ist, während sich an diesen ersten Abschnitten 5 jeweils zweite Abschnitte 6 anschließen, in denen das Trägermaterial 3 nicht modifiziert ist.

Durch die Modifikation des Trägermaterials 3 in den ersten Abschnitten 5 wird eine Wechselwirkung mit dem Klebstoff 4 erreicht, wodurch Eigenschaften in Bezug auf die Bruchdehnung und/oder Bruchzähigkeit des Klebstoffes 4 in den Bereichen der ersten Abschnitte 5 gegenüber den Bereichen der zweiten Abschnitte 6 verändert wird, um so eine in Bezug auf die Bruchdehnung oder Bruchzähigkeit heterogene Klebverbindung zu erreichen.

Weist die Klebverbindung im ausgehärteten Zustand eine Heterogenität in Bezug auf die Bruchdehnung oder Bruchzähigkeit auf, so wechseln sich Bereiche mit hoher Bruchdehnung und niedrigerer Steifigkeit/Festigkeit und Bereiche mit niedriger Bruchdehnung und hoher Steifigkeit/Festigkeit ab, wodurch Risse, die sich innerhalb der Klebverbindung bilden, sich immer nur bis zum nächsten Abschnitt ausbreiten können.

Damit der Filmklebstoff 1 auf die Rolle 2 aufgewickelt werden kann, werden beiden Flächenseiten des Filmklebstoffes 1 mit einer Trennfolie abgedeckt, so dass die einzelnen Flächenseiten nicht aneinander kleben bleiben.

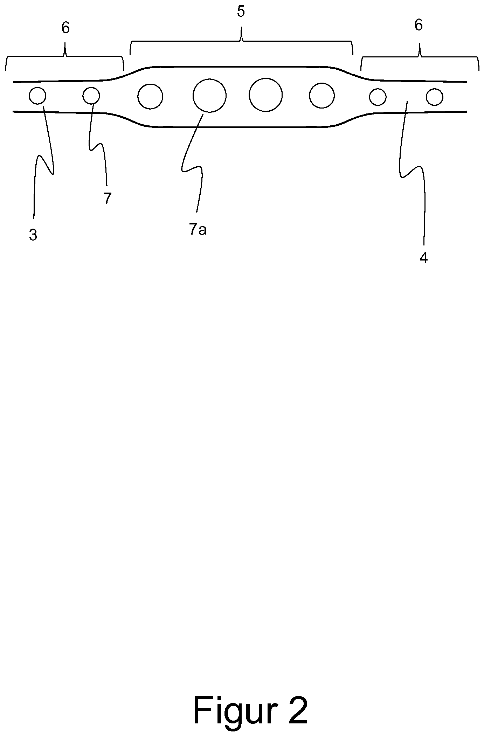

Figur 2 zeigt einen Querschnitt A-A (s. Figur 1) durch einen Teil des Filmklebstoffes 1, wobei hier die ersten Abschnitte 5 geometrisch modifiziert sind. Die in der Figur 2 (und den nachfolgenden Figuren) gezeigten modifizierten Bereiche 5 sind dabei nicht proportional zu den übrigen nicht-modifizierten Bereichen 6. In der Praxis würde man große Bereiche mit hoher Steifigkeit und Festigkeit herstellen, welche von kleinen Bereichen mit hoher Bruchdehnung und Bruchzähigkeit umgeben sind. Die in den Figuren gezeigten Ausführungsformen sind daher diesbezüglich nicht maßstabsgetreu.

Das flächige Trägermaterial 3 ist hierbei ein gewebtes Textil, das einzelne Fasern aufweist, die längs und quer des Filmklebstoffes 1 verlaufen können. Im ersten Abschnitt 5 des Filmklebstoffes sind dabei die in diesem Bereich liegenden Fasern 7a dicker (größerer Querschnitt als Fasern im zweiten Abschnitt 6), so dass hier insgesamt eine Aufdickung des Filmklebstoffes im ersten Bereich 5 erfolgt. Durch die Variation der Klebfilmdicke über die gesamte Länge des Filmklebstoffes hinweg kann die Verbindungseigenschaft der Klebverbindung beeinflusst werden, da die Klebfilmdicke Einfluss auf die Verbindungseigenschaft hat. Die Erhöhung der Klebfilmdicke führt dabei zu einer Reduktion der Steifigkeit der Verbindung, wodurch die Bruchdehnung der Verbindung im ersten Abschnitt 5 erhöht wird. Durch die Verstärkung bzw. Aufdickung des Trägermaterials im ersten Abschnitt 5 lässt sich so eine geometrische Modifikation des Trägermaterials bewirken, die dann zu der gewünschten Eigenschaftsänderung der Klebverbindung führt. Hierbei wird eine Modifikation der Klebeschicht/Klebenaht bewirkt.

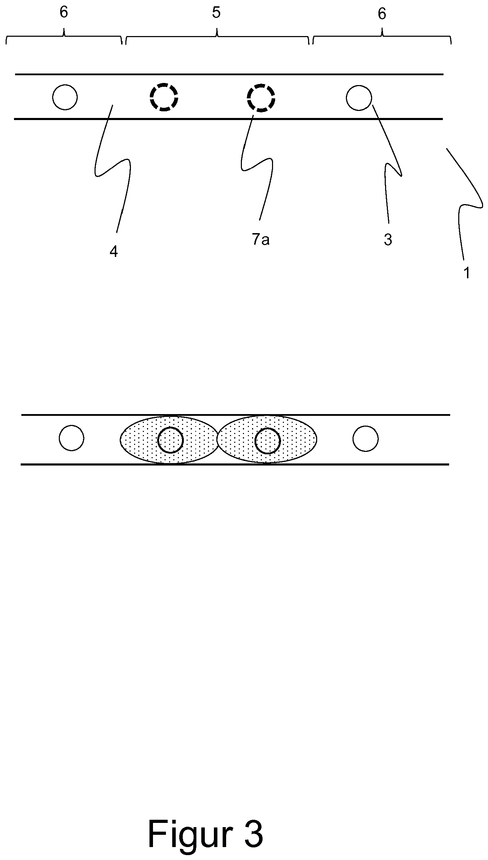

Figur 3 zeigt schematisch einen Querschnitt durch einen Filmklebstoff 1, bei dem das Trägermaterial 3 im ersten Abschnitt 5 chemisch und/oder stofflich so modifiziert wurde, dass beim Aushärten des Klebstoffes 4 dieser mit der chemischen und/oder stofflichen Modifikation im ersten Abschnitt 5 derart zusammenwirkt, dass in diesem Bereich die mechanische Eigenschaft der Klebverbindung gegenüber den Bereichen der zweiten Abschnitte 6 verändert wurde.

Bei einer stofflichen Modifikation wird dabei das Material des textilen Trägermaterials 3, wie im Ausführungsbeispiel der Figur 3 also die Fasern 7a, durch Fasern ausgetauscht, die eine entsprechende Modifikation aufweisen. Eine solche Modifikation der Fasern 7a kann beispielsweise dergestalt sein, dass Fasern verwendet werden, die eine chemische Substanz enthalten, die mit dem Klebstoff beim Aushärten reagieren.

Denkbar ist aber auch, dass das Trägermaterial 3 Fasern hat, die in allen Bereichen und Abschnitten gleich sind, wobei in den ersten Abschnitten 5 entsprechende Substanzen auf die Fasern des Trägermaterials 3 aufgebracht werden, die dann mit dem Klebstoff reagieren. Solche Substanzen bzw. Stoffe können beispielsweise pulverförmig oder gelförmig aufgebracht sein und sind dabei nur in diesen ersten Abschnitten 5 des Trägermaterials 3 vorhanden.

Hierdurch wird eine lokale Eigenschaftsveränderung der Klebverbindung in den ersten Abschnitten 5 bewirkt, ohne dass mit mehreren Klebstoffsystemen verschiedener Art gearbeitet werden muss.

Denkbar ist auch, dass zusätzliche Partikel oder Fremdstoffe an die Fasern angeordnet werden, die an den Fasern 7a im ersten Abschnitt 5 des Trägermaterials anhaften und mit dem Klebstoff 4 beim Aushärten so zusammenwirken, dass beispielsweise aufgrund einer chemischen Reaktion die Klebverbindung im ersten Abschnitt 5 gegenüber den anderen Abschnitten veränderte mechanische Eigenschaften hinsichtlich der Bruchdehnung bzw. Bruchzähigkeit aufweist.

Im unteren Teil der Figur 3 ist dabei die ausgehärtete Klebverbindung gezeigt, wobei im ersten Abschnitt 5 des Trägermaterials aufgrund der chemischen Reaktion des Klebstoffes 4 beim Aushärten mit der stofflichen und/oder chemischen Modifikation eine veränderte mechanische Eigenschaft entstanden ist, die sich insbesondere um die Fasern 7a im ersten Abschnitt 5 herum ausbildet.

Geht man beispielsweise davon aus, dass die Modifikation eine Erhöhung der Bruchdehnung bzw. Bruchzähigkeit bewirkt, so entstehen Risse bei Belastung der Klebverbindung in der Regel zunächst in den zweiten Abschnitten 6 der Klebverbindung, wobei sich dort gebildete Risse dann schließlich nur bis zu einem angrenzenden Bereich eines ersten Abschnittes 5 ausbreiten können, da die ersten Abschnitte 5 dann eine erhöhte Bruchzähigkeit bzw. Bruchdehnung aufweisen und Risse sich entlang durch diesen Abschnitt dann nicht mehr ausbreiten.

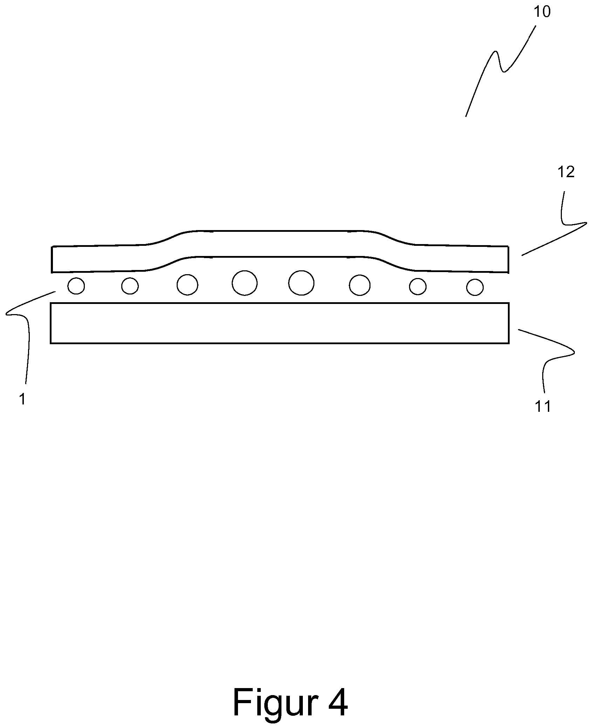

Figur 4 zeigt schematisch das Verkleben zweier Fügepartner 11 und 12 mithilfe eines derartigen Filmklebstoffes 1 zur Herstellung eines Bauteils 10. Das Bauteil 10 kann beispielsweise ein Faserverbundbauteil sein, welches aus zwei Faserverbund-Bauelementen mithilfe des Filmklebstoffes 1 stoffschlüssig gefügt werden soll.

Im Ausführungsbeispiel der Figur 4 weist dabei der Filmklebstoff 1 eine geometrische Modifikation im ersten Abschnitt 5 auf, so dass im ersten Abschnitt 5 des Filmklebstoffes 1 die Klebfilmdicke erhöht ist, wodurch in diesem Bereich eine höhere Bruchzähigkeit bzw. Bruchdehnung als in den übrigen Abschnitten 6 bewirkt wird.

Handelt es sich bei dem Bauteil 10 um ein Faserverbundbauteil, so werden oder sind das erste Bauelement 11 und das zweite Bauelement 12 (erster Fügepartner 11, zweiter Fügepartner 12) ebenfalls aus einem Faserverbundwerkstoff hergestellt. So kann im Ausführungsbeispiel der Figur 4 der erste Fügepartner 11 bereits ein ausgehärtetes Faserverbund-Bauelement sein, bei dem das das Fasermaterial infundierte Matrixmaterial bereits ausgehärtet ist. An die Fügeoberfläche des ersten Fügepartners 11 wird nun der Filmklebstoff 1 flächig und plan aufgelegt, so dass der Klebstoff 4 des Filmklebstoffes 1 mit der Fügeoberfläche des ersten Fügepartners 11 kontaktiert. Anschließend wird das noch nicht ausgehärtete Faserverbund-Bauelement 12 (zweiter Fügepartner) auf den Filmklebstoff 1 aufgelegt, wobei hier das Fasermaterial so auf dem Filmklebstoff 1 drapiert werden muss, dass die geometrische Modifikation im ersten Abschnitt 15 des Filmklebstoffes 1 mit berücksichtigt wird. Mit anderen Worten, die durch den Filmklebstoff 1 bedingte Formabweichung aufgrund der geometrischen Modifikation muss formtechnisch durch den zweiten Fügepartner im Ausführungsbeispiel der Figur 4 ausgeglichen werden.

Im Ausführungsbeispiel der Figur 4 ist dabei der Filmklebstoff 1 so ausgebildet, dass die geometrische Modifikation im ersten Abschnitt 5 lediglich eine Seite bzw. eine Klebefläche betrifft, so dass hier an die Formabweichung aufgrund der geometrischen Modifikation lediglich einer der Fügepartner, im Ausführungsbeispiel der Figur 4 der zweite Fügepartner 12, an die Form angepasst werden muss. Denkbar ist aber auch, dass der Filmklebstoff 1 eine geometrische Modifikation aufweist, bei der beide Klebeflächen eine entsprechende Formabweichung haben, so dass auch beide Fügepartner an diese Formabweichung angepasst werden müssen. In einem derartigen Fall ist es denkbar, dass der erste Fügepartner 11 kein ausgehärteter Fügepartner ist, um die entsprechende Formabweichung kompensieren zu können. Denkbar ist aber auch, dass die Fügepartner 11 und 12 so bereitgestellt werden, dass sie die geometrische Modifikation des Filmklebstoffes 1 bereits eingeprägt haben und somit die geometrische Modifikation aufnehmen können.

Insbesondere beim Fügen von duktilen Fügepartnern (z.B. Aluminiumbleche) kann sich der Fügepartner beim Konsolidieren der Klebverbindung unter Autoklavdruck oder in einer Presse an das Abstandstextil anpassen. Denkbar wäre aber auch das Fügen thermoplastischer Faserverbundbauteile, welche ggf. unter erhöhter Temperatur plastisch werden und sich so an den Klebfilm anpassen können.

Als Trägermaterial bzw. Abstandstextil können dabei Textile jeglicher Art verwendet werden, wie beispielsweise Vlies, Gewebe, Netze, Garne etc. Eine stoffliche, chemische und/oder geometrische Modifikation kann beispielsweise durch das Einbringen zusätzlichen Trägermaterials in Form von Textilen, Vliesen, Geweben, Netzen oder Garnen erfolgen, die beispielsweise chemisch entsprechend modifiziert sind. Es können aber auch Pulver, Partikel oder Füllstoffe verwendet werden, die beispielsweise durch Anschmelzen oder einem Haftvermittler an dem Trägermaterial anhaften. Auch Suspensionen sind denkbar. Darüber hinaus kann eine chemische und/oder stoffliche Modifikation auch durch Substanzen in pastöser Form oder als Tränkung, z.B. durch Aufbringen bei erhöhter Temperatur mit anschließendem Erstarren, verwendet werden.

Stoffe für eine Modifikation, um beispielsweise ein Epoxidharz entsprechend zu modifizieren, sind beispielsweise Copolyamide, Copolyester, Polyetherimid, Polysulfon, Polyphenylsulfon, Polyethersulfon. Diese Thermoplaste besitzen vorteilhafte mechanische Eigenschaften und können mit Epoxidharzen Mischphasen bilden, wobei deren Verarbeitung als Textil, Pulver oder in pastöser Form möglich ist. Kautschuk mit Hydroxylgruppen an den freien Molekülenden (HTPB bzw. CTBN, ATBN) können sich in Epoxy lösen und scheiden in der Aushärtereaktion aufgrund schwindender Löslichkeit kugelförmig aus. Diese Materialien sind bekannt als Zähigkeitsmodifikator für Epoxidharze. Das Aufbringen auf den Träger kann über alle genannten Formen erfolgen. Phenoxy (Polyhydroxyether bzw. Bisphenol-A-Epichlorhydrin mit freien OH-Endgruppen) ist ein Thermoplast, der eine Löslichkeit in Epoxy besitzt und sich in die Raumnetzstruktur des Duromers einbauen kann. Es lässt sich als Textil, Pulver oder in pastöser Form aufbringen.

## Patentansprüche

1. Filmklebstoff (1) zum klebenden Fügen wenigstens zweier Fügepartner (11, 12), der einen Klebstoff (4) für eine Klebverbindung der Fügepartner (11, 12) und ein textiles, flächiges Trägermaterial (3) enthält, wobei der Klebstoff (4) filmartig auf das textile, flächige Trägermaterial (3) aufgetragen ist, **dadurch gekennzeichnet, dass** das textile, flächige Trägermaterial (3) wenigstens einen ersten Abschnitt (5) aufweist, der an wenigstens einen zweiten Abschnitt (6) des Trägermaterials (3) angrenzt, wobei das Trägermaterial (3) des ersten Abschnittes (5) gegenüber dem Trägermaterial (3) des zweiten Abschnittes (6) derart modifiziert ist, das nach dem Aushärten des Klebstoffes (4) die Klebverbindung in dem Bereich des ersten Abschnittes (5) eine mechanische Eigenschaft in Bezug auf die Bruchdehnung oder Bruchzähigkeit hat, die von der mechanischen Eigenschaft der Klebverbindung in dem Bereich des zweiten Abschnittes (6) verschieden ist, wobei das textile, flächige Trägermaterial vollständig von dem Klebstoff umschlossen und getränkt ist und offenporig ist, so dass die Klebverbindung ausschließlich durch den Klebstoff realisiert und das Trägermaterial somit kein Fügepartner wird,
- wobei das textile, flächige Trägermaterial (3) in einem der ersten Abschnitte (5) derart stofflig modifiziert ist, dass das Material des Trägermaterials (3) in diesen Bereichen ein Material ist, das beim Aushärten des Klebstoffes (4) mit diesem eine chemische Reaktion eingeht, um die gewünschte mechanische Eigenschaft in den ersten Abschnitten (5) zu bewirken,
- wobei das textile, flächige Trägermaterial (3) in einem der ersten Abschnitte (5) derart chemisch modifiziert ist, dass in diesem Bereich bzw. Bereichen dem Trägermaterial (3) zusätzliche Stoffe, Partikel und/oder Füllstoffe hinzugefügt sind, die beim Aushärten des Klebstoffes (4) mit diesem eine chemische Reaktion eingehen, um die gewünschte mechanische Eigenschaft in den ersten Abschnitten (5) zu bewirken, und/oder
- wobei das textile, flächige Trägermaterial (3) in einem der ersten Abschnitte (5) derart geometrisch modifiziert ist, dass das Material des Trägermaterials (3) in diesen Bereichen ein Material ist, das nach dem Aushärten des Klebstoffes (4) eine höhere oder niedrigere Dicke der Klebverbindung als in den Bereichen der zweiten Abschnitte (6) bewirkt.

2. Filmklebstoff (1) nach Anspruch 1, **dadurch gekennzeichnet, dass** das Trägermaterial (3) des ersten Abschnittes (5) gegenüber dem Trägermaterial (3) des zweiten Abschnittes (6) derart modifiziert ist, dass die Klebverbindung in dem Bereich des ersten Abschnittes (5) eine höhere Bruchdehnung oder eine höhere Bruchzähigkeit hat, als die Klebverbindung in dem Bereich des zweiten Abschnittes (6) oder dass die Klebverbindung in dem Bereich des ersten Abschnittes (5) eine niedrigere Bruchdehnung oder eine niedrigere Bruchzähigkeit hat, als die Klebverbindung in dem Bereich des zweiten Abschnittes (6), wobei die Bruchzähigkeit oder Bruchdehnung um mindestens 20%, vorzugsweise um mindestens 50 %, höher oder niedriger ist.

3. Filmklebstoff (1) nach einem der vorhergehenden Ansprüche, **dadurch gekennzeichnet, dass** das textile, flächige Trägermaterial (3) eine Mehrzahl von ersten Abschnitten (5) aufweist, die jeweils durch einen der zweiten Abschnitte (6) voneinander abgegrenzt sind, so dass durch die ersten Abschnitte (5) jeweils separate Zonen gebildet werden, die nicht miteinander verbunden sind.

4. Filmklebstoff (1) nach einem der vorhergehenden Ansprüche, **dadurch gekennzeichnet, dass** der Filmklebstoff (1) bandförmig ist und dass sich erste und zweite Abschnitte in Längsrichtung abwechseln.

5. Verfahren zur Herstellung eines Filmklebstoffes (1) zum klebenden Fügen wenigstens zweier Fügepartner (11, 12), bei dem ein Klebstoff (4) für eine Klebverbindung der Fügepartner (11, 12) auf ein textiles, flächiges Trägermaterial (3) filmartig aufgebracht wird, **dadurch gekennzeichnet, dass** das textile, flächige Trägermaterial (3) in wenigstens einem ersten Abschnitt (5) gegenüber wenigstens einem zweiten Abschnitt (6) derart modifiziert wird, das spätestens nach dem Aushärten des Klebstoffes (4) die Klebverbindung in dem Bereich des ersten Abschnittes (5) eine mechanische Eigenschaft in Bezug auf die Bruchdehnung oder Bruchzähigkeit hat, die von der mechanischen Eigenschaft der Klebverbindung in dem Bereich des zweiten Abschnittes (6) verschieden ist, wobei als textiles, flächiges Trägermaterial ein vollständig von dem Klebstoff umschlossenes und getränktes und offenporiges Trägermaterial bereitgestellt wird, so dass die Klebverbindung ausschließlich durch den Klebstoff realisiert und das Trägermaterial somit kein Fügepartner wird,
- wobei das textile, flächige Trägermaterial (3) in einem der ersten Abschnitte (5) derart stofflich modifiziert wird, dass als Material des Trägermaterials (3) in diesen Bereichen ein Material verwendet wird, das spätestens beim Aushärten des Klebstoffes (4) mit diesem eine chemische Reaktion eingeht, um die gewünschte mechanische Eigenschaft in den ersten Abschnitten (5) zu bewirken,
- wobei das textile, flächige Trägermaterial (3) in einem der ersten Abschnitte (5) derart chemisch modifiziert wird, dass in diesem Bereich bzw. Bereichen dem Trägermaterial (3) zusätzliche Stoffe, Partikel und/oder Füllstoffe hinzugefügt werden, die spätestens beim Aushärten des Klebstoffes (4) mit diesem eine chemische Reaktion eingehen, um die gewünschte mechanische Eigenschaft in den ersten Abschnitten (5) zu bewirken, und/oder
- wobei das textile, flächige Trägermaterial (3) in einem der ersten Abschnitte (5) derart geometrisch modifiziert wird, dass als Material des Trägermaterials (3) in diesem Bereich bzw. Bereichen ein Material verwendet wird, das spätestens nach dem Aushärten des Klebstoffes (4) eine höhere oder niedrigere Dicke der Klebverbindung als in den Bereichen der zweiten Abschnitte (6) bewirkt.

6. Verfahren nach Anspruch 5, **dadurch gekennzeichnet, dass** das Trägermaterial (3) des ersten Abschnittes (5) derart modifiziert wird, dass die Klebverbindung in dem Bereich des ersten Abschnittes (5) eine höhere Bruchdehnung oder eine höhere Bruchzähigkeit hat, als die Klebverbindung in dem Bereich des zweiten Abschnittes (6) oder dass die Klebverbindung in dem Bereich des ersten Abschnittes (5) eine niedrigere Bruchdehnung oder eine niedrigere Bruchzähigkeit hat, als die Klebverbindung in dem Bereich des zweiten Abschnittes (6), wobei die Bruchzähigkeit oder Bruchdehnung um mindestens 20%, vorzugsweise um mindestens 50 %, höher oder niedriger ist

7. Verfahren nach einem der Ansprüche 5 oder 6, **dadurch gekennzeichnet, dass** eine Mehrzahl von ersten Abschnitten (5) gebildet werden, die jeweils durch einen der zweiten Abschnitte (6) voneinander abgegrenzt werden, so dass durch die ersten Abschnitte (5) jeweils separate Zonen gebildet werden, die nicht miteinander verbunden sind.

8. Verfahren zur Herstellung einer Klebverbindung zwischen wenigstens zwei Fügepartnern (11, 12), mit den Schritten:
- Bereitstellen eines Filmklebstoffes (1) nach einem der Ansprüche 1 bis 4,
- Kontaktieren des Filmklebstoffes (1) mit jeweils einer Fügeoberfläche des ersten und wenigstens zweiten Fügepartners (11, 12) und
- Aushärten des Klebstoffes (4) des Filmklebstoffes (1).

9. Verfahren nach Anspruch 8, **dadurch gekennzeichnet, dass** die Fügepartner (11, 12) Faserverbundbauteile sind, die aus einem Faserverbundwerkstoff aufweisend ein Fasermaterial und ein Matrixmaterial hergestellt sind.

## Claims

1. Film adhesive (1) for the adhesive joining of at least two joining partners (11, 12), which contains an adhesive (4) for an adhesive connection of the joining partners (11, 12) and a textile, flat carrier material (3), the adhesive (4) being applied to the textile, flat carrier material (3) in a film-like manner, **characterized in in that** the textile, flat carrier material (3) has at least one first section (5) which adjoins at least one second section (6) of the carrier material (3), the carrier material (3) of the first section (5) being modified with respect to the carrier material (3) of the second section (6) in such a way that, after the adhesive (4) has cured, the adhesive bond in the region of the first section (5) has a mechanical property with respect to the fracture strain or fracture toughness which is different from the mechanical property of the adhesive bond in the region of the second section (6), whereby the textile, flat carrier material being completely enclosed and impregnated by the adhesive and being open-pored, so that the adhesive bond is realized exclusively by the adhesive and the carrier material thus does not become a joining partner,
- wherein the textile, flat carrier material (3) is materially modified in one of the first sections (5) in such a way that the material of the carrier material (3) in these regions is a material which, when the adhesive (4) cures, undergoes a chemical reaction with the this in order to bring about the desired mechanical property in the first sections (5),
- wherein the textile, flat carrier material (3) is chemically modified in one of the first sections (5) in such a way that additional substances, particles and/or fillers are added to the carrier material (3) in this region or regions, which enter into a chemical reaction with the adhesive (4) when the this cures, in order to bring about the desired mechanical property in the first sections (5), and/or
- wherein the textile, flat carrier material (3) is geometrically modified in one of the first sections (5) in such a way that the material of the carrier material (3) in these regions is a material which, after the adhesive (4) has cured, produces a higher or lower thickness of the adhesive bond than in the regions of the second sections (6).

2. Film adhesive (1) according to claim 1, **characterized in that** the carrier material (3) of the first section (5) is modified with respect to the carrier material (3) of the second section (6) in such a way that the adhesive bond in the region of the first section (5) has a higher fracture strain or a higher fracture toughness than the adhesive bond in the region of the second section (6) or that the adhesive bond in the region of the first section (5) has a lower fracture strain or a lower fracture toughness than the adhesive bond in the region of the second section (6), whereby the fracture toughness or fracture strain being at least 20%, preferably at least 50%, higher or lower.

3. Film adhesive (1) according to one of the preceding claims, **characterized in that** the textile, flat carrier material (3) has a plurality of first sections (5) which are each delimited from one another by one of the second sections (6), so that each first sections (5) form separate zones which are not connected to one another.

4. Film adhesive (1) according to one of the preceding claims, **characterized in that** the film adhesive (1) is ribbon-shaped and that first and second sections alternate in the longitudinal direction.

5. Method for producing a film adhesive (1) for the adhesive joining of at least two joining partners (11, 12), in which an adhesive (4) for an adhesive connection of the joining partners (11, 12) is applied in the manner of a film to a textile, flat carrier material (3), **characterized in that** the textile, flat carrier material (3) is modified in at least one first section (5) with respect to at least one second section (6) in such a way that, at the latest after the adhesive (4) has cured, the bonded joint in the region of the first section (5) has a mechanical property with respect to fracture strain or fracture toughness which is different from the mechanical property of the bonded joint in the region of the second section (6), wherein a carrier material which is completely enclosed and impregnated by the adhesive and has open pores is provided as the textile, flat carrier material, so that the adhesive bond is realized exclusively by the adhesive and the carrier material thus does not become a joining partner,
- wherein the textile, flat carrier material (3) is materially modified in one of the first sections (5) in such a way that a material is used as the material of the carrier material (3) in these regions which enters into a chemical reaction with the adhesive (4) at the latest when the adhesive (4) cures, in order to bring about the desired mechanical property in the first sections (5),
- wherein the textile, flat carrier material (3) is chemically modified in one of the first sections (5) in such a way that additional substances, particles and/or fillers are added to the carrier material (3) in this region or regions, which enter into a chemical reaction with the adhesive (4) at the latest when the adhesive (4) cures, in order to bring about the desired mechanical property in the first sections (5), and/or
- wherein the textile, flat carrier material (3) is geometrically modified in one of the first sections (5) in such a way that a material is used as the material of the carrier material (3) in this region or regions which, at the latest after curing of the adhesive (4), produces a higher or lower thickness of the adhesive bond than in the regions of the second sections (6).

6. Method according to claim 5, **characterized in that** the carrier material (3) of the first section (5) is modified in such a way that the adhesive bond in the region of the first section (5) has a higher fracture strain or a higher fracture toughness than the adhesive bond in the region of the second section (6) or that the adhesive bond in the region of the first section (5) has a lower fracture strain or a lower fracture toughness than the adhesive bond in the region of the second section (6), wherein the fracture toughness or fracture strain is higher or lower by at least 20%, preferably by at least 50%.

7. Method according to one of claims 5 or 6, **characterized in that** a plurality of first sections (5) are formed, which are each delimited from each other by one of the second sections (6), so that separate zones are formed by the first sections (5), which are not connected to each other.

8. Method for producing an adhesive bond between at least two joining partners (11, 12), comprising the steps of:
- providing a film adhesive (1) according to any one of claims 1 to 4,
- contacting the film adhesive (1) with a respective joining surface of the first and at least the second joining partner (11, 12) and
- curing of the adhesive (4) of the film adhesive (1).

9. Method according to claim 8, **characterized in that** the joining partners (11, 12) are fiber composite components which are produced from a fiber composite material comprising a fiber material and a matrix material.

## Revendications

1. Adhésif en forme de film (1) pour l'assemblage par collage d'au moins deux partenaires à assembler (11, 12), qui comprend un adhésif (4) pour une liaison collée des partenaires à assembler (11, 12) et un matériau de support textile plat (3), l'adhésif (4) étant appliqué sous forme de film sur le matériau de support textile plat (3),
**caractérisé en ce que** le matériau de support textile plat (3) présente au moins une première portion (5) adjacente à au moins une deuxième portion (6) du matériau de support (3), le matériau de support (3) de la première portion (5) étant modifié par rapport au matériau de support (3) de la deuxième portion (6) de telle sorte qu'après le durcissement de l'adhésif (4), la liaison collée dans la zone de la première portion (5) a une propriété mécanique en ce qui concerne l'allongement à la rupture ou la ténacité à la rupture, qui est différente de la propriété mécanique de la liaison collée dans la zone de la deuxième portion (6), le matériau de support textile plat étant entièrement entouré et imprégné par l'adhésif et étant à pores ouverts, de sorte que la liaison collée est réalisée exclusivement par l'adhésif et que le matériau de support ne devient donc pas un partenaire à assembler,
sachant que
- le matériau de support textile plat (3) dans l'une des premières portions (5) est modifié matériellement de telle sorte que le matériau du matériau de support (3) dans ces zones est un matériau qui, lors du durcissement de l'adhésif (4), entre en réaction chimique avec celui-ci afin de procurer la propriété mécanique souhaitée dans les premières portions (5),
- le matériau de support textile plat (3) dans l'une des premières portions (5) est modifié chimiquement de telle sorte que, dans cette zone ou ces zones, des substances, particules et/ou charges supplémentaires sont ajoutées au matériau de support (3), lesquelles, lors du durcissement de l'adhésif (4), entrent en réaction chimique avec celui-ci afin de procurer la propriété mécanique souhaitée dans les premières portions (5), et/ou
- le matériau de support textile plat (3) dans l'une des premières portions (5) est modifié géométriquement de telle sorte que le matériau du matériau de support (3) dans ces zones est un matériau qui, après le durcissement de l'adhésif (4), procure une épaisseur plus élevée ou plus faible de la liaison collée que celle dans les zones des deuxièmes portions (6).

2. Adhésif en forme de film (1) selon la revendication 1,
**caractérisé en ce que** le matériau de support (3) de la première portion (5) est modifié par rapport au matériau de support (3) de la deuxième portion (6) de telle sorte que la liaison collée dans la zone de la première portion (5) présente un allongement à la rupture plus élevé ou une ténacité à la rupture plus élevée que la liaison collée dans la zone de la deuxième portion (6) ou que la liaison collée dans la zone de la première portion (5) présente un allongement à la rupture plus faible ou une ténacité à la rupture plus faible que la liaison collée dans la zone de la deuxième portion (6), la ténacité à la rupture ou l'allongement à la rupture étant supérieur ou inférieur d'au moins 20 %, de préférence d'au moins 50 %.

3. Adhésif en forme de film (1) selon l'une des revendications précédentes, **caractérisé en ce que** le matériau de support textile plat (3) présente une pluralité de premières portions (5) qui délimitées les unes par rapport aux autres respectivement par l'une des deuxièmes portions (6), de sorte que les premières portions (5) forment respectivement des zones séparées qui ne sont pas reliées entre elles.

4. Adhésif en forme de film (1) selon l'une des revendications précédentes, **caractérisé en ce que** l'adhésif en forme de film (1) est en forme de bande et **en ce que** les premières et deuxièmes portions alternent dans la direction longitudinale.

5. Procédé de fabrication d'un adhésif en forme de film (1) pour l'assemblage par collage d'au moins deux partenaires à assembler (11, 12), dans lequel un adhésif (4) pour une liaison collée des partenaires à assembler (11, 12) est appliqué sous forme de film sur un matériau de support textile plat (3),
**caractérisé en ce que** le matériau de support textile plat (3) dans au moins une première portion (5) est modifié par rapport à au moins une deuxième portion (6) de telle sorte, qu'au plus tard après le durcissement de l'adhésif (4), la liaison collée dans la zone de la première portion (5) a une propriété mécanique en ce qui concerne l'allongement à la rupture ou la ténacité à la rupture, qui est différente de la propriété mécanique de la liaison collée dans la zone de la deuxième portion (6), un matériau de support entièrement entouré et imprégné par l'adhésif et à pores ouverts étant fourni comme matériau de support textile plat, de sorte que la liaison collée est réalisée exclusivement par l'adhésif et que le matériau de support ne devient donc pas un partenaire à assembler,
sachant que
- le matériau de support textile plat (3) dans l'une des premières portions (5) est modifié matériellement de telle sorte que l'on utilise comme matériau du matériau de support (3) dans ces zones un matériau qui, au plus tard lors du durcissement de l'adhésif (4), entre en réaction chimique avec celui-ci afin de procurer la propriété mécanique souhaitée dans les premières portions (5),
- le matériau de support textile plat (3) dans l'une des premières portions (5) est modifié chimiquement de telle sorte que, dans cette zone ou ces zones, on ajoute au matériau de support (3) des substances, des particules et/ou des charges supplémentaires qui, au plus tard lors du durcissement de l'adhésif (4), entrent en réaction chimique avec celui-ci afin de procurer la propriété mécanique souhaitée dans les premières portions (5), et/ou
- le matériau de support textile plat (3) dans l'une des premières portions (5) est modifié géométriquement de telle sorte que l'on utilise comme matériau du matériau de support (3) dans cette zone ou ces zones un matériau qui, au plus tard après le durcissement de l'adhésif (4), procure une épaisseur plus élevée ou plus faible de la liaison collée que celle dans les zones des deuxièmes portions (6).

6. Procédé selon la revendication 5,
**caractérisé en ce que** le matériau de support (3) de la première portion (5) est modifié de telle sorte que la liaison collée dans la zone de la première portion (5) présente un allongement à la rupture plus élevé ou une ténacité à la rupture plus élevée que la liaison collée dans la zone de la deuxième portion (6), ou que la liaison collée dans la zone de la première portion (5) présente un allongement à la rupture plus faible ou une ténacité à la rupture plus faible que la liaison collée dans la zone de la deuxième portion (6), la ténacité à la rupture ou l'allongement à la rupture étant supérieur ou inférieur d'au moins 20 %, de préférence d'au moins 50 %.

7. Procédé selon l'une des revendications 5 ou 6,
**caractérisé en ce que** l'on forme une pluralité de premières portions (5) qui sont délimitées les unes par rapport aux autres respectivement par l'une des deuxièmes portions (6), de sorte que les premières portions (5) forment respectivement des zones séparées qui ne sont pas reliées entre elles.

8. Procédé de réalisation d'une liaison collée entre au moins deux partenaires à assembler (11, 12), comprenant les étapes consistant à :
- fournir un adhésif en forme de film (1) selon l'une des revendications 1 à 4,
- mettre en contact l'adhésif en forme de film (1) avec une surface d'assemblage respective du premier et dudit au moins un deuxième partenaire à assembler (11, 12), et
- laisser durcir l'adhésif (4) de l'adhésif en forme de film (1).

9. Procédé selon la revendication 8,
**caractérisé en ce que** les partenaires à assembler (11, 12) sont des composants composites fibreux qui sont fabriqués à partir d'un matériau composite fibreux comprenant un matériau fibreux et un matériau de matrice.
